# EUROPEAN PATENT APPLICATION

(11) **EP 4 776 497 A1**
(43) Date of publication of application: **15.07.2026**
(21) Application number: 25200735.6
(22) Date of filing: 08.09.2025
(51) Int. Cl.: H02M 1/32, H02M 7/48

(54) **INVERTER APPARATUS AND METHOD FOR CONTROLLING INVERTER**

(30) Priority: 08.01.2025 KR 20250003117
(71) Applicant: Hyundai Motor Company, Seoul 06797 (KR); Kia Corporation, Seoul 06797 (KR)
(72) Inventor: HAM, Do Hyeon, 18280 Hwaseong-si, Gyeonggi-do (KR); LEE, Sol Bin, 18280 Hwaseong-si, Gyeonggi-do (KR); PARK, Nae Chun, 18280 Hwaseong-si, Gyeonggi-do (KR); KIM, In Ho, 18280 Hwaseong-si, Gyeonggi- do (KR)
(74) Representative: Isarpatent

(57) **Abstract**

An inverter apparatus includes a capacitor to which DC voltage is applied, a power module that converts voltage of the capacitor into AC voltage through a switching element, a micro controller unit (MCU) that controls the power module, a resistor network including a plurality of resistor sets connected in series, and a board on which the MCU and the resistor network are mounted. Each of the resistor sets may include a plurality of resistors connected in parallel. The resistor network may be electrically connected between the capacitor and the power module.

## Description

### TECHNICAL FIELD

The present disclosure relates to an inverter apparatus and an inverter control method, and more particularly, relates to a technology used to discharge a capacitor by using a resistor, or to measure the voltage of a capacitor.

### BACKGROUND

Inverters used in electric vehicles and hybrid vehicles handle high-voltage DC power, and thus the residual voltage of an internal capacitor should be quickly discharged when the power is cut off to prevent safety accidents.

General regulations require that the residual voltage of a capacitor be reduced to 60 V or less within 60 seconds when the power is turned off. To this end, ceramic resistors are often attached to capacitors.

### SUMMARY

The present disclosure has been made to solve the above-mentioned problems occurring in the prior art while advantages achieved by the prior art are maintained intact.

An aspect of the present disclosure provides an inverter apparatus that may perform discharging and sensing functions simultaneously by removing a discharge resistor designed inside a capacitor and reconstructing a sensing resistor used in the existing board in a new method, and an inverter control method.

An aspect of the present disclosure provides an inverter apparatus that may reduce the size of a capacitor and the cost of the discharge resistor by eliminating the discharge resistor designed inside the capacitor, and an inverter control method.

An aspect of the present disclosure provides an inverter apparatus that may not require a wiring for fixing the discharge resistor inside the capacitor or a structure for supporting the discharge resistor by eliminating the discharge resistor designed inside the capacitor, and an inverter control method.

An aspect of the present disclosure provides an inverter apparatus that may reduce the cost of wiring and connection tasks by eliminating the discharge resistor designed inside the capacitor, and an inverter control method.

An aspect of the present disclosure provides an inverter apparatus that may prevent mechanical damage to components due to vibrations generated during the driving of a vehicle or vibration testing by eliminating the discharge resistor designed inside the capacitor, and an inverter control method.

An aspect of the present disclosure provides an inverter apparatus that may improve the durability of a resistor by soldering a resistor performing both a discharge function and a sensing function to an integrated board installed inside an inverter, and an inverter control method.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, an inverter apparatus may include a capacitor to which DC voltage is applied, a power module that converts voltage of the capacitor into AC voltage through a switching element, a micro controller unit (MCU) that controls the power module, a resistor network including a plurality of resistor sets connected in series, and a board on which the MCU and the resistor network are mounted. Each of the resistor sets may include a plurality of resistors connected in parallel. The resistor network may be electrically connected between the capacitor and the power module.

In an embodiment, the resistor network may be positioned within a predetermined distance from a coupling structure of the board for coupling the board and housing, or may be positioned at an edge area of the board.

In an embodiment, the resistor network may be used to discharge the capacitor such that the voltage of the capacitor reaches voltage lower than predetermined voltage within a predetermined time, or may be used to measure the voltage of the capacitor.

In an embodiment, the resistor network may be used to discharge the voltage of the capacitor to the predetermined voltage within the predetermined time based on a predetermined condition related to power of the inverter apparatus.

In an embodiment, the predetermined condition related to the power of the inverter apparatus may include at least one of a condition that the power of the inverter apparatus is turned off, or a condition that the inverter apparatus does not operate normally, or any combination thereof.

In an embodiment, the resistor network may be used to discharge the capacitor such that the voltage of the capacitor reaches the voltage lower than the predetermined voltage within the predetermined time, based on the power of the inverter apparatus being turned off while the resistor network is used to measure the voltage of the capacitor in a state where the voltage of the capacitor is accumulated.

In an embodiment, a third resistor connected in series with the resistor network may be further mounted on the board, and the third resistor may be used to divide the voltage of the capacitor into a level of voltage input to the MCU.

In an embodiment, the resistor network may include a first resistor and a second resistor, and an interval at which the first resistor and the second resistor are placed on the board may be determined in consideration of a temperature at which each of the first resistor and the second resistor generates heat.

In an embodiment, the resistor network may include a predetermined number of resistors, and the predetermined number may be set such that a temperature at which the resistors, which generate heat and of which a number is the predetermined number, do not exceed a predetermined temperature.

In an embodiment, the voltage of the capacitor may be measured by a voltage drop between one end of the resistor network and the other end of the resistor network.

According to an aspect of the present disclosure, an inverter control method may include discharging, by a resistor network mounted on a board, a capacitor such that voltage of the capacitor reaches voltage lower than predetermined voltage within a predetermined time, measuring, by the resistor network, the voltage of the capacitor, and converting, by a power module, the voltage of the capacitor into AC voltage. The resistor network and an MCU that controls the power module are mounted on the board. The resistor network includes a plurality of resistor sets connected in series, and is electrically connected between the capacitor and the power module. Each of the resistor sets includes a plurality of resistors connected in parallel.

In the inverter control method according to an embodiment, the resistor network may be positioned within a predetermined distance from a coupling structure of the board for coupling the board and housing, or may be positioned at an edge area of the board.

In the inverter control method according to an embodiment, the discharging, by the resistor network, of the capacitor such that the voltage of the capacitor reaches the voltage lower than the predetermined voltage within the predetermined time may include discharging, by the resistor network, the voltage of the capacitor to the predetermined voltage within the predetermined time based on a predetermined condition related to power of an inverter apparatus.

In the inverter control method according to an embodiment, the predetermined condition related to the power of the inverter apparatus may include at least one of a condition that the power of the inverter apparatus is turned off, or a condition that the inverter apparatus does not operate normally, or any combination thereof.

In the inverter control method according to an embodiment, the discharging, by the resistor network, of the capacitor such that the voltage of the capacitor reaches the voltage lower than the predetermined voltage within the predetermined time may include discharging, by the resistor network, the capacitor such that the voltage of the capacitor reaches the voltage lower than the predetermined voltage within the predetermined time, based on power of an inverter apparatus being turned off while the resistor network is used to measure the voltage of the capacitor in a state where the voltage of the capacitor is accumulated.

The inverter control method according to an embodiment may further include dividing the voltage of the capacitor into a level of voltage input to the MCU by a third resistor, which is connected in series with the resistor network and which is mounted on the board.

In the inverter control method according to an embodiment, the resistor network may include a first resistor and a second resistor, and an interval at which the first resistor and the second resistor are placed on the board may be determined in consideration of a temperature at which each of the first resistor and the second resistor generates heat.

In the inverter control method according to an embodiment, the resistor network may include a predetermined number of resistors, and the predetermined number may be set such that a temperature at which the resistors, which generate heat and of which a number is the predetermined number, do not exceed a predetermined temperature.

In the inverter control method according to an embodiment, the converting, by the power module, of the voltage of the capacitor into the AC voltage may include converting the voltage of the capacitor into the AC voltage through a predetermined number of switching elements.

In the inverter control method according to an embodiment, the measuring, by the resistor network, of the voltage of the capacitor may include measuring the voltage of the capacitor by a voltage drop between one end of the resistor network and the other end of the resistor network.

### BRIEF DESCRIPTION OF THE DRAWINGS

The above and other objects, features and advantages of the present disclosure will be more apparent from the following detailed description taken in conjunction with the accompanying drawings:
FIG. 1 is a block diagram illustrating an inverter device, according to an embodiment of the present disclosure;
FIG. 2 is a drawing showing a part of a board of an inverter apparatus, on which a resistor network of an inverter apparatus is placed, according to an embodiment of the present disclosure;
FIG. 3 is a circuit diagram for a resistor network of an inverter apparatus performing both a discharge function and a voltage sensing function, according to an embodiment of the present disclosure;
FIG. 4 is a graph showing DC voltage, power consumption per resistance, and DC sensing voltage, which are measured as a capacitor of an inverter apparatus is discharged, according to an embodiment of the present disclosure;
FIG. 5 is a diagram showing a temperature of resistance according to DC voltage of an inverter apparatus, according to an embodiment of the present disclosure;
FIG. 6 is a flowchart for describing an inverter apparatus or an inverter control method, according to an embodiment of the present disclosure;
FIG. 7 is a flowchart for describing a mechanism, in which a resistor network of an inverter apparatus performs a discharge function and a voltage sensing function, according to an embodiment of the present disclosure; and
FIG. 8 is a diagram illustrating a computing system related to an inverter apparatus or an inverter control method, according to an embodiment of the present disclosure.

### DETAILED DESCRIPTION

Hereinafter, some embodiments of the present disclosure will be described in detail with reference to the accompanying drawings. In adding reference numerals to components of each drawing, it should be noted that the same components include the same reference numerals, although they are indicated on another drawing. Furthermore, in describing the embodiments of the present disclosure, detailed descriptions associated with well-known functions or configurations will be omitted when they may make subject matters of the present disclosure unnecessarily obscure.

In describing elements of an embodiment of the present disclosure, the terms first, second, A, B, (a), (b), and the like may be used herein. These terms are only used to distinguish one element from another element, but do not limit the corresponding elements irrespective of the nature, order, or priority of the corresponding elements. Moreover, the expression "at least one of A, B, or C or any combination thereof" may include "A, B, or C, or any combination thereof such as AB, BC, AC, or ABC".

Furthermore, unless otherwise defined, all terms used herein, including technical or scientific terms, include the same meaning as commonly understood by one of ordinary skill in the technical field to which the present disclosure belongs. It will be understood that terms used herein should be interpreted as including a meaning that is consistent with their meaning in the context of the present disclosure and the relevant art and will not be interpreted in an idealized or overly formal sense unless expressly so defined herein.

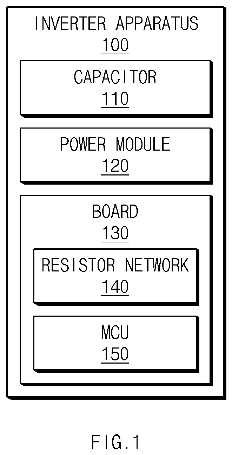

Hereinafter, various embodiments of the present disclosure will be described in detail with reference to FIGS. 1 to 9.

FIG. 1 is a block diagram illustrating an inverter device, according to an embodiment of the present disclosure.

Referring to FIG. 1, an inverter apparatus 100 according to an embodiment of the present disclosure may be implemented inside a vehicle. In this case, the inverter apparatus 100 may be integrated with internal control units of a vehicle and may be implemented with a separate device so as to be coupled with control units of the vehicle by means of a separate connection means.

According to an embodiment, the inverter apparatus 100 may include a capacitor 110, a power module 120, a board 130, a resistor network 140, and a micro controller unit (MCU) 150. The configuration of the inverter apparatus 100 shown in FIG. 1 is an example, and embodiments of the present disclosure are not limited thereto. For example, the inverter apparatus 100 may further include components not illustrated in FIG. 1.

According to an embodiment, the capacitor 110 may accumulate voltage. DC voltage may be applied to the capacitor 110. For example, the capacitor 110 may store DC power supplied from a battery and may release the energy as needed.

According to an embodiment, the capacitor 110 may be connected to a voltage input terminal to which the DC voltage supplied to the inverter apparatus 100 is applied. The capacitor 110 may be connected to the voltage input terminal of the inverter apparatus 100, thereby effectively eliminating a voltage ripple. The voltage ripple may refer to a periodic voltage fluctuation occurring during power conversion, and may be caused due to switching operations, load fluctuations, or input power characteristics. The voltage ripple may degrade the stability of a system and may negatively affect output quality and performance.

According to an embodiment, the capacitor 110 may include characteristics of storing and releasing electrical energy, and may smooth the voltage of the inverter apparatus 100 through the characteristics. The capacitor 110 may contribute to reducing the amplitude of ripple voltage and maintaining average voltage.

According to an embodiment, the inverter apparatus 100 may be designed to comply with safety-related regulations. For example, when the inverter apparatus 100 is powered off, the inverter apparatus 100 may be designed to reduce the voltage remaining in the capacitor 110 within a certain time to prevent electric shock. In this case, through a discharge resistor, the inverter apparatus 100 may lower the voltage remaining in the capacitor 110 within a certain time.

According to an embodiment, the power module 120 may convert the DC voltage into AC voltage through a switching element. For example, the power module 120 may convert the voltage of a capacitor into the AC voltage.

For example, the power module 120 may include a silicon carbide (SIC) element, an insulated gate bipolar transistor (IGBT) element, or a metal-oxide-semiconductor field-effect transistor (MOSFET) element.

For example, the power module 120 may include a circuit that converts DC voltage to AC voltage.

According to an embodiment, the power module 120 may convert the DC voltage into the AC voltage through switching elements of which the number is a predetermined number. The predetermined number may be determined in consideration of efficiency, cost, heat generation, or reliability.

For example, when the number of switching elements increases, the current and voltage to be handled by each element may be distributed, thereby reducing heat generation and power loss. Accordingly, a design capable of handling higher voltage and current may be possible. Moreover, the waveform of output voltage may be controlled more precisely, and thus high-quality AC voltage may be generated.

On the other hand, when the number of switching elements decreases, a circuit and a control system may be simplified, thereby reducing costs and increasing ease of maintenance.

According to an embodiment, the MCU 150 may control the power module 120. For example, the MCU 150 may generate a drive signal of a switching element and may manage overall operations. The MCU 150 may generate a pulse width modulation (PWM) signal to control the on/off state of the switching element and may adjust the frequency and amplitude of the output voltage.

According to an embodiment, the MCU 150 may execute various control algorithms for optimizing the operation of the power module 120. For example, the quality of the output voltage may be improved through vector control or sinusoidal pulse width modulation (SPWM).

According to an embodiment, the MCU 150 may monitor the status of the system by collecting and processing various pieces of sensor data such as current, voltage, and temperature in real time and may perform protective operations (e.g., overcurrent protection and overheating protection) as necessary.

According to an embodiment, the MCU 150 may precisely control the timing of switching elements, thereby maximizing power conversion efficiency and minimizing a switching loss.

According to an embodiment, the MCU 150 may report the status of the inverter or change settings, by communicating with an external control system or a user interface. According to an embodiment, the MCU 150 and the resistor network 140 may be mounted on the board 130.

According to an embodiment, the board 130 may include a circuit board on which the MCU 150, the resistor network 140, and other circuit elements are mounted. For example, the board 130 may comprehensively manage electrical connections and controls related to the inverter apparatus 100. The board 130 may form a signal transmission path between circuit elements and may provide a physical structure.

According to an embodiment, the board 130 may include various interfaces to support electrical connections with an external device. For example, the board 130 may be connected to an external sensor, a power supply, a communication module, the capacitor 110, or the power module 120 through a connector, a pin header, or a soldering pad.

According to an embodiment, the resistor network 140 may be electrically connected between the capacitor 110 and the power module 120. Here, "being electrically connected" may mean a physical or functional connection state in which current or voltage is capable of flowing. For example, the resistor network 140 may be connected in series or parallel with the capacitor 110 and the power module 120.

According to an embodiment, the resistor network 140 may be directly or indirectly connected to the capacitor 110 or the power module 120. For example, another element may be additionally connected between the resistor network 140 and the capacitor 110. Furthermore, other elements may be additionally connected between the resistor network 140 and the power module 120.

According to an embodiment, the resistor network 140 may be electrically connected between the capacitor 110 and the power module 120 to measure voltage applied to the power module 120 and voltage applied to the capacitor 110.

According to an embodiment, the resistor network 140 may be connected in various methods in which the voltage of the capacitor 110 is capable of being applied to the resistor network 140. For example, the connection method between the resistor network 140 and the capacitor 110 may be implemented in a series connection method, a parallel connection method, or a composite connection method. In this way, the desired electrical characteristics may be implemented and the performance required in a specific application environment may be achieved.

According to an embodiment, the resistor network 140 may include a plurality of resistor sets connected in series.

According to an embodiment, the resistor set may include a plurality of resistors connected in parallel. Here, a resistance value of each resistor may be determined as a value for achieving the desired electrical characteristics. The resistor set connected in parallel may lower the overall resistance value or may distribute current through multiple paths. Such the parallel connection may be used for overload protection and stable operation. According to an embodiment, the resistor network 140 may be used to discharge the capacitor 110 such that the voltage of the capacitor 110 reaches voltage lower than predetermined voltage within a predetermined time.

For example, the predetermined time may be set to the time required to reduce the voltage remaining in the capacitor 110 to a safe level to prevent electric shock. As a specific example, the predetermined time may be set to 60 seconds.

For example, the predetermined voltage may be set to the extent to which the voltage remaining in the capacitor 110 after the power is turned off does not cause an electric shock. As a specific example, the predetermined voltage may be set to 60 V or less.

According to an embodiment, while current flows through the resistor network 140, a voltage drop may occur at opposite ends of the resistor network 140. The voltage of the capacitor 110 may be reduced by the voltage drop occurring at opposite ends of the resistor network 140.

For example, the inverter apparatus 100 may lower the voltage of the capacitor 110 by applying the voltage discharged from the capacitor 110 to the resistor network 140.

According to an embodiment, the inverter apparatus 100 may adjust the time required for the voltage of the capacitor 110 to be discharged, by using at least one of the capacitance of the capacitor 110, or the size of the resistor network 140, or any combination thereof.

According to an embodiment, the resistor network 140 may be used to measure the voltage of the capacitor 110. For example, the resistor network 140 may include a resistor for a sensor.

According to an embodiment, the voltage of the capacitor 110 may correspond to the DC voltage applied to the capacitor 110. For example, as voltage is accumulated in capacitor 110, the voltage of capacitor 110 may get closer to the DC voltage. As a specific example, in a state where the capacitor 110 is fully accumulated, the voltage measured through the resistor network 140 may be understood to be the same as the voltage of the capacitor 110.

According to an embodiment, the resistor network 140 may be positioned within a predetermined distance from a coupling structure of a circuit board, or may be positioned at an edge area of the board.

According to an embodiment, the resistor network 140 may be positioned within a predetermined distance from a coupling structure of the board that couples the board and housing.

According to an embodiment, the coupling structure of the board may include a coupling structure that couples the board and the housing.

According to an embodiment, the housing may accommodate an inverter apparatus according to an embodiment of the present disclosure. That is, the housing may accommodate the capacitor 110, the power module 120, the board 130, and the resistor network 140 according to an embodiment of the present disclosure.

According to an embodiment, the board 130 may be fixedly coupled with the housing. For example, the board 130 may be coupled with the housing through the coupling structure of the board. To be coupled with the board 130, the housing may include a thread, a slot, a mounting recess, or a structure performing a function similar thereto, which corresponds to the coupling structure of the board 130.

According to an embodiment, the coupling structure of the board may be implemented in various forms for fixing the board and stably maintaining an electrical connection. The coupling structure may be designed in consideration of mechanical strength and durability, and may ensure the position fixation of the board and the ease of assembly process. For example, the coupling structure of the board may include a bolting structure.

According to an embodiment, the coupling structure may include various fixing means in addition to the bolting structure. For example, a screw, a rivet, a clip, or a snap-fit structure may be used. These structures may be useful for fixing the board to other electronic components or an external case.

Besides, the coupling structure may assist in the alignment of electronic components and may prevent the movement of the board due to external shock or vibration. To this end, the coupling structure may include a shock absorbing pad, an elastic member, or a cushioning material.

According to an embodiment, the coupling structure of the board may be coupled to a heatsink or a shielding structure to perform thermal management and electromagnetic shielding functions.

According to an embodiment, heat may be effectively released near the coupling structure of the board. The coupling structure may be a structural element that physically contacts the board, and thus may be used as a heat dissipation path.

For example, when the coupling structure is made of metal, heat generated on the board may be efficiently delivered to an external heatsink or the external case of a device. The coupling structure may be made of aluminum, copper, or alloy materials with high thermal conductivity.

In addition, the convection effect of air may be increased by forming a heat dissipation auxiliary structure such as a heat dissipation fin or a heat dissipation rib around the coupling structure, thereby improving heat dissipation performance. When the coupling structure is placed at a location at which air easily circulates, heat may be more quickly released through natural or forced convection.

According to an embodiment, the coupling structure may be designed as an integral part of the heat sink. In this case, the coupling structure may fix the board and may release heat at the same time. For example, when there is a high-power component such as a power conversion circuit, the coupling structure near the corresponding component may be used for a major heat dissipation path.

According to an embodiment, to optimize heat dissipation near the coupling structure, sufficient ventilation holes may be designed to ensure airflow passages or to prevent heat accumulation.

According to an embodiment, the coupling structure may include a groove or a slot formed on the surface of the board. The groove or the slot may include a space for accommodating a fixing means, such as a bolt. In other words, the coupling structure may include the groove or the slot to which a fixing means such as a bolt is not coupled. Accordingly, the resistor network 140 may be placed within a predetermined distance from the groove or the slot formed on the surface of the board.

According to an embodiment, the resistor network 140 may be placed in the edge area of the board.

The edges of the board are generally placed at a location at which air flows more smoothly, and thus heat generated in the resistor network 140 may be dissipated more efficiently. In particular, when the resistor network 140 in the edge area is placed in consideration of the internal air circulation of an electronic device, heat accumulation may be reduced and the heat may be quickly dissipated to the outside through natural convection or forced air flow.

Moreover, when the resistor network 140 is placed at the edge, the resistor network 140 may be in physical contact or close proximity to an external heatsink, a metal case, or a heat sink fin, thereby shortening a heat transfer path. This structure may reduce thermal resistance, may improve heat dissipation efficiency, and may improve the overall thermal management performance of the device.

Furthermore, the resistor network 140 may be coupled with a highly thermally conductive board, such as a metal base board PCB, to distribute heat throughout the board. In this way, overheating of specific areas may be prevented and heat balance may be maintained.

According to an embodiment, a physical distance from sensitive electronic components inside the board may be secured by placing the resistor network in this edge area, thereby reducing thermal interference and performance degradation due to heat. For example, heat dissipation may be maximized by additionally installing vents or cooling fans near the edge area.

According to an embodiment, the resistor network 140 may be used to discharge the voltage of the capacitor 110 to a predetermined voltage within a predetermined time based on a predetermined condition related to the power of the inverter apparatus 100.

According to an embodiment, the predetermined condition related to the power of the inverter apparatus 100 may include a condition that the voltage of the capacitor 110 is discharged to prevent an electric shock accident.

According to an embodiment, the predetermined condition related to the power of the inverter apparatus 100 may include at least one of a condition that the inverter apparatus 100 is powered off, or a condition that the inverter apparatus 100 does not operate normally, or any combination thereof.

For example, when the inverter apparatus 100 is powered off, the resistor network 140 may be used to discharge the voltage of the capacitor 110 to a predetermined voltage within a predetermined time.

For example, the case where the inverter apparatus 100 is powered off may include a case where voltage is not applied to the inverter apparatus 100, or current flowing to the inverter apparatus 100 is cut off.

For example, when the inverter apparatus 100 is not operating properly, the resistor network 140 may be used to discharge the voltage of the capacitor 110 to a predetermined voltage within a predetermined time.

For example, the case where the inverter apparatus 100 is not operating properly may include a case where the circuit of the inverter apparatus 100 is shorted. Moreover, the case where the inverter apparatus 100 is not operating properly may include a case where the circuit of the inverter apparatus 100 is shorted. Furthermore, the case where the inverter apparatus 100 is not operating properly may include a case where an inductance value of the inverter apparatus 100 is changed abnormally. Also, the case where the inverter apparatus 100 is not operating properly may include a case where excessively high current flowing through the inverter apparatus 100 causes magnetic saturation.

According to an embodiment, based on the fact that the inverter apparatus 100 is powered off while the resistor network 140 is used to measure the voltage of the capacitor 110 in a state where the voltage of the capacitor 110 is accumulated, the resistor network 140 may be used to discharge the capacitor 110 such that the voltage of the capacitor 110 reaches voltage lower than predetermined voltage within a predetermined time.

According to an embodiment, even though the inverter apparatus 100 is powered off in a state where the voltage of the capacitor 110 is not accumulated, the voltage of the capacitor 110 may not be discharged.

According to an embodiment, the state where the voltage of the capacitor 110 is not accumulated may include a state where only the voltage lower than the predetermined voltage is accumulated in the capacitor 110.

For example, even though the inverter apparatus 100 is powered off when the voltage accumulated in the capacitor 110 is lower than the predetermined voltage, the inverter apparatus 100 may not discharge the capacitor 110 to reach the voltage lower than the predetermined voltage within the predetermined time.

According to an embodiment, even though the inverter apparatus 100 is powered off in the state where the voltage of the capacitor 110 is not accumulated, the resistor network 140 may not discharge the voltage of the capacitor 110, but may measure the voltage of the capacitor 110.

According to an embodiment, when the inverter apparatus 100 is in operation, the resistor network 140 may be used to measure the voltage of the capacitor 110.

According to an embodiment, a third resistor connected in series with the resistor network 140 may be further included. For example, the third resistor may be used to divide the voltage of a capacitor to the level of the voltage input to an MCU.

For example, the MCU may include a processor that performs functions of measuring battery voltage or processing data. As a specific example, the MCU may identify the voltage of capacitor 110. The MCU may identify the voltage discharged from the capacitor 110.

According to an embodiment, the MCU may determine whether the voltage of the capacitor 110 reaches the voltage lower than the predetermined voltage within the predetermined time.

According to an embodiment, when the resistor network 140 is used to measure the voltage of the capacitor 110, the voltage of the capacitor 110 may be divided into voltage capable of being applied to the MCU. The voltage capable of being applied to the MCU may be set differently depending on the MCU. For example, the voltage of the capacitor 110 may be divided into voltage that is equal to or greater than 0 V and equal to or less than 5 V.

According to an embodiment, the third resistor may be used to divide the voltage of the capacitor 110. For example, the third resistor may be used to divide the voltage of the capacitor 110 according to Ohm's Law or Kirchhoffs Voltage Law.

According to an embodiment, the third resistor may be connected in series with the resistor network 140.

For example, the third resistor may be used to divide the voltage of the capacitor 110 according to a ratio of resistance values of the resistor network 140 connected in series. As a specific example, the third resistor may be used to divide the voltage of the capacitor 110 of 60 V into voltage of 5 V. The divided voltage of 5 V may be applied to the MCU.

According to an embodiment, the resistor network 140 may include a plurality of resistors. For example, the resistor network 140 may include a first resistor and a second resistor. Here, the first resistor and the second resistor are only examples, and the resistor network 140 may include 'n' resistors.

According to an embodiment, the first resistor and the second resistor may be connected in series or parallel with each other. For example, the voltage of the capacitor 110 may be applied to the first resistor and the second resistor, which are connected in series with each other. As another example, the voltage of the capacitor 110 may be applied to the first resistor and the second resistor connected in parallel with each other.

According to an embodiment, when the resistor network 140 includes three or more resistors, the three or more resistors may be connected in at least one of series, or parallel, or any combination thereof. For example, two resistors may be connected in parallel with each other, and other resistors may be connected in series with the two resistors connected in parallel.

According to an embodiment, when the resistor network 140 includes a plurality of resistors, the plurality of resistors may be connected in at least one of series, or parallel, or any combination thereof so as to include a target resistance value.

For example, the plurality of resistors may be connected to include resistance values capable of discharging the capacitor 110 such that the voltage of the capacitor 110 reaches the voltage lower than the predetermined voltage within the predetermined time.

According to an embodiment, when the resistor network 140 includes a plurality of resistors, an interval between the plurality of resistors placed on the board may be determined in consideration of a temperature at which each of the resistors generates heat. For example, the board may be included in the inverter apparatus 100. For example, the resistor network 140 may be designed on the board.

According to an embodiment, an interval between resistors including a high heating temperature may be wider than an interval between resistors including a low heating temperature.

For example, the interval between the resistors placed on the board may vary depending on a resistance value of each resistor. As a specific example, the temperature of the heat dissipated by the resistor may vary depending on the resistance value. Accordingly, an interval between resistors with great resistance values may be greater than an interval between resistors with small resistance values.

According to an embodiment, when the resistor network 140 includes the first resistor and the second resistor, the interval at which the first resistor and the second resistor are placed on the board may be determined in consideration of a temperature at which each of the first resistor and the second resistor generates heat.

According to an embodiment, the interval at which the first resistor and the second resistor are placed on the board may vary depending on resistance values of the first resistor or the second resistor.

According to an embodiment, the resistor network 140 may include the predetermined number of resistors.

According to an embodiment, the predetermined number may be set such that the temperature at which each of resistors, which generate heat and of which the number is the predetermined number, does not exceed a predetermined temperature.

According to an embodiment, the predetermined temperature may be set in consideration of the power consumed per resistor and the heat generation of the resistor. For example, the predetermined temperature may be set to a temperature at which the resistor is capable of operating normally.

According to an embodiment, whether the temperature at which each resistor generates heat does not exceed a predetermined temperature may be determined by comparing a temperature of the resistor with an ambient temperature of the resistor. For example, the predetermined temperature may be set based on a difference between the temperature, at which the resistor generates heat, and the ambient temperature of the resistor. As a specific example, when the predetermined temperature is set by comparing the temperature of the resistor with the ambient temperature of the resistor, the predetermined temperature may be set to 25 degrees. At this time, when the temperature of the resistor is 60 degrees and the predetermined temperature of the resistor is 30 degrees, the temperature of the resistor may be determined to exceed the predetermined temperature.

According to an embodiment, whether the temperature at which each resistor generates heat does not exceed the predetermined temperature may be determined by the absolute value of the temperature at which the resistor generates heat. In this case, the predetermined temperature may be fixed to a specific temperature. As a specific example, the predetermined temperature may be fixed at 70 degrees. In this case, when the temperature at which each resistor generates heat is 80, the temperature of the resistor may be determined to exceed the predetermined temperature.

According to an embodiment, whether the temperature at which each resistor generates heat does not exceed the predetermined temperature may be determined by the amount of change in a temperature at which each resistor generates heat. For example, the amount of change in a temperature at which each resistor generates heat may be calculated as a difference between a temperature before voltage is applied to the resistor and a temperature after voltage is applied to the resistor.

According to an embodiment, the resistor network 140 may include 24 resistors. For example, the resistor network 140 may include 12 resistor groups, and each of the resistor groups may include two resistors connected in parallel with each other. In this case, the 12 resistor groups may be connected in series with each other.

According to an embodiment, the voltage of the capacitor 110 may be measured by the voltage drop between one end of the resistor network 140 and the other end of the resistor network 140.

For example, the voltage of the capacitor 110 may be measured by the voltage drop between a first terminal of the resistor network 140 and a second terminal of the resistor network 140. Here, the first terminal may indicate one terminal of the resistor network 140, and the second terminal may indicate the opposite terminal of the resistor network 140. The inverter apparatus 100 may indirectly identify the change in voltage of the capacitor 110 by using the voltage drop caused by the current flowing through the resistor network 140. The inverter apparatus 100 may efficiently monitor the voltage change of the capacitor 110 by using the resistor network 140.

Referring to FIG. 1 according to an embodiment, through the resistor network 140 used to discharge the voltage of the capacitor 110 and to measure the voltage of the capacitor 110, the size of the inverter apparatus 100 or the capacitor 110 may be reduced, and the cost may be reduced.

According to an embodiment, the resistor network may include at least one resistor. For example, discharging a capacitor through a resistor network or measuring capacitor voltage through a resistor network may be performed through at least one resistor.

According to an embodiment, the at least one resistor may be used to discharge the capacitor 110 such that the voltage of the capacitor 110 reaches voltage lower than predetermined voltage within a predetermined time.

According to an embodiment, while current flows through the at least one resistor, a voltage drop may occur at opposite ends of the at least one resistor. The voltage of the capacitor 110 may be reduced by the voltage drop occurring at opposite ends of the at least one resistor.

According to an embodiment, the inverter apparatus 100 may adjust the time required for the voltage of the capacitor 110 to be discharged, by using at least one of the capacitance of the capacitor 110, or the size of the at least one resistor, or any combination thereof.

According to an embodiment, the at least one resistor may be used to measure the voltage of the capacitor 110. According to an embodiment, the voltage of the capacitor 110 may correspond to the DC voltage applied to the capacitor 110. For example, as voltage is accumulated in capacitor 110, the voltage of capacitor 110 may get closer to the DC voltage.

According to an embodiment, the at least one resistor may be used to discharge the voltage of the capacitor 110 to a predetermined voltage within a predetermined time based on a predetermined condition related to the power of the inverter apparatus 100.

According to an embodiment, the predetermined condition related to the power of the inverter apparatus 100 may include at least one of a condition that the inverter apparatus 100 is powered off, or a condition that the inverter apparatus 100 does not operate normally, or any combination thereof.

According to an embodiment, based on the fact that the inverter apparatus 100 is powered off while the at least one resistor is used to measure the voltage of the capacitor 110 in a state where the voltage of the capacitor 110 is accumulated, the at least one resistor may be used to discharge the capacitor 110 such that the voltage of the capacitor 110 reaches voltage lower than predetermined voltage within a predetermined time.

According to an embodiment, even though the inverter apparatus 100 is powered off in a state where the voltage of the capacitor 110 is not accumulated, the voltage of the capacitor 110 may not be discharged.

According to an embodiment, the state where the voltage of the capacitor 110 is not accumulated may include a state where only the voltage lower than the predetermined voltage is accumulated in the capacitor 110.

According to an embodiment, even though the inverter apparatus 100 is powered off in the state where the voltage of the capacitor 110 is not accumulated, the at least one resistor may not discharge the voltage of the capacitor 110, but may measure the voltage of the capacitor 110.

According to an embodiment, when the inverter apparatus 100 is in operation, the at least one resistor may be used to measure the voltage of the capacitor 110.

According to an embodiment, the third resistor connected in series with the at least one resistor may be further included. For example, the third resistor may be used to divide the voltage of a capacitor to the level of the voltage input to an MCU.

According to an embodiment, when the at least one resistor is used to measure the voltage of the capacitor 110, the voltage of the capacitor 110 may be divided into voltage capable of being applied to the MCU. The voltage capable of being applied to the MCU may be set differently depending on the MCU. For example, the voltage of the capacitor 110 may be divided into voltage that is equal to or greater than 0 V and equal to or less than 5 V.

According to an embodiment, the third resistor may be used to divide the voltage of the capacitor 110. For example, the third resistor may be used to divide the voltage of the capacitor 110 according to Ohm's Law or Kirchhoffs Voltage Law.

According to an embodiment, when the at least one resistor includes a plurality of resistors, an interval between the plurality of resistors placed on the board may be determined in consideration of a temperature at which each of the resistors generates heat. For example, the circuit may be included in the inverter apparatus 100. For example, the at least one resistor may be designed on the circuit.

According to an embodiment, an interval between resistors including a high heating temperature may be wider than an interval between resistors including a low heating temperature.

According to an embodiment, when the at least one resistor includes the first resistor and the second resistor, the interval at which the first resistor and the second resistor are placed on the circuit may be determined in consideration of a temperature at which each of the first resistor and the second resistor generates heat.

According to an embodiment, the interval at which the first resistor and the second resistor are placed on the circuit may vary depending on resistance values of the first resistor or the second resistor.

According to an embodiment, the at least one resistor may include the predetermined number of resistors.

According to an embodiment, the predetermined number may be set such that the temperature at which each of resistors, which generate heat and of which the number is the predetermined number, does not exceed a predetermined temperature.

According to an embodiment, the predetermined temperature may be set in consideration of the power consumed per resistor and the heat generation of the resistor. For example, the predetermined temperature may be set to a temperature at which the resistor is capable of operating normally.

According to an embodiment, the voltage of the capacitor 110 may be measured by the voltage drop between one end of the at least one resistor and the other end of the at least one resistor.

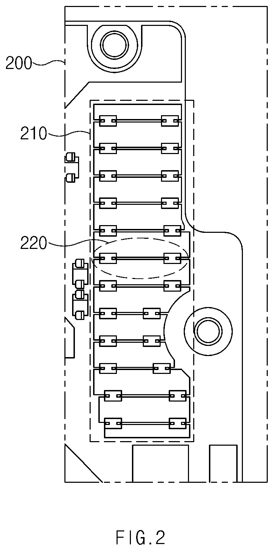

FIG. 2 is a drawing showing a part of a board of an inverter apparatus, on which a resistor network of an inverter apparatus is placed, according to an embodiment of the present disclosure.

FIG. 2 according to an embodiment may indicate a part of a board included in an inverter apparatus.

According to an embodiment, the inverter apparatus may include a board 200 capable of controlling a voltage of a battery. The board 200 of the inverter apparatus may include a resistor network 210 including a plurality of resistors connected in series or parallel.

According to an embodiment, the resistor network 210 may include a plurality of resistor sets connected in series. A resistor set may include a plurality of resistors connected in parallel.

For example, the resistor network 210 may include a resistor array that physically includes a plurality of resistor sets within a single package.

For example, a resistor set may include a resistor array physically including a plurality of resistors within a single package.

According to an embodiment, the resistor network 210 included in the board 200 of the inverter apparatus may be used to discharge voltage and may also be used to measure voltage. For example, the inverter apparatus may discharge the voltage of a capacitor to 60 V within 60 seconds by using the resistor network 210. For example, an inverter apparatus may measure the voltage of the capacitor by using the resistor network 210.

According to an embodiment, the resistor network 210 may include a resistor set 220 in which two resistors are connected in parallel with each other. An interval between resistors included in the resistor set 220 may be determined in consideration of a resistance value or a temperature of a resistor. For example, as the temperature at which a resistor dissipates heat is higher, the interval between the resistors may be wider.

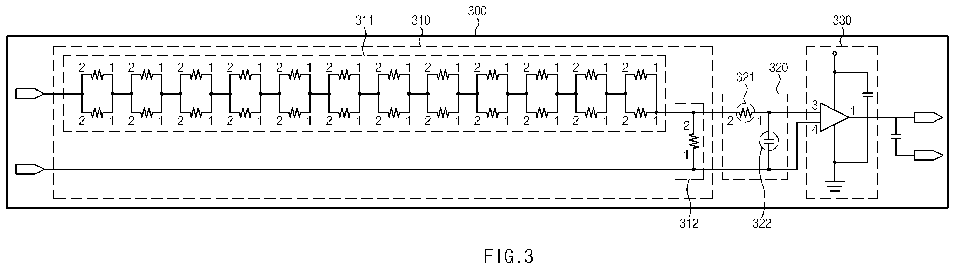

FIG. 3 is a circuit diagram for a resistor network of an inverter apparatus performing both a discharge function and a sensing function, according to an embodiment of the present disclosure.

An inverter apparatus according to an embodiment may include a circuit 300 associated with a resistor capable of performing both a discharge function and a sensing function.

The circuit 300 illustrated in FIG. 3 according to an embodiment may include a resistor network 310 including resistors capable of performing a discharge function and a sensing function, a low pass filter (LPF) element group 320, or a differential amplifier element group 330. However, this is only an example, and the LPF element group 320 or the differential amplifier element group 330 may be omitted.

DC voltage may be applied to the circuit 300 illustrated in FIG. 3 according to an embodiment. For example, the DC voltage of a DC capacitor of an inverter apparatus may be applied to the circuit 300. As a specific example, as the DC voltage of a high-voltage battery is applied to the inverter apparatus, the DC capacitor of the inverter apparatus may be accumulated. Accordingly, the voltage of the DC capacitor may be applied to the circuit 300 shown in FIG. 3.

According to an embodiment, the resistor network 310 including resistors capable of performing a discharge function and a sensing function may include a resistor network 311 used to discharge a capacitor such that the voltage of the capacitor reaches voltage lower than predetermined voltage within a predetermined time, or to measure the voltage of the capacitor.

Referring to the circuit 300 of FIG. 3 according to an embodiment, the number of the resistor network 311 may be determined as the number where a temperature at which the resistor network 311 generates heat does not exceed a predetermined temperature. In this case, the predetermined temperature may be set in consideration of the power consumed per resistor and the heat generation of the resistor. For example, the predetermined temperature may be set to a temperature at which the resistor is capable of operating normally.

According to an embodiment, the resistor network 311 may be connected in at least one of series, or parallel, or any combination thereof. For example, the resistor network 311 included in the circuit 300 of FIG. 3 may include a total of twenty-four (24) resistors. As a specific example, the resistor network 311 may include a resistor set in which two resistors are connected in parallel with each other. Moreover, the resistor network 311 may include 12 resistor sets. The twelve (12) resistor sets may be connected in series with each other. However, this is only an embodiment, and the number and connection method of the resistor network 311 may be changed in various ways.

According to an embodiment, the resistor network 310 including resistors capable of performing a discharge function and a sensing function may include a third resistor 312 used to divide the voltage of the capacitor to the level of the voltage input to an MCU.

According to an embodiment, the third resistor 312 may be connected to the resistor network 311 and may be used to divide the DC voltage. For example, the third resistor 312 may be connected in series with the resistor network 311 and may be used to divide the voltage of the DC capacitor according to Ohm's Law or Kirchhoff s Voltage Law.

According to an embodiment, the LPF element group 320 may include elements for implementing a low-pass filter. For example, the LPF element group 320 may include a fourth resistor 321 and a second capacitor 322. The LPF element group 320 may perform a function of an electronic filter that passes signals in a low frequency band and blocks signals in a high frequency band.

According to an embodiment, the differential amplifier element group 330 may amplify a voltage difference between two input signals. The differential amplifier element group 330 may perform specific roles related to signal processing and stability enhancement.

An inverter apparatus according to an embodiment may be configured through the circuit 300 of FIG. 3. In this way, the resistor network 311 may be designed to perform both a discharge function and a sensing function.

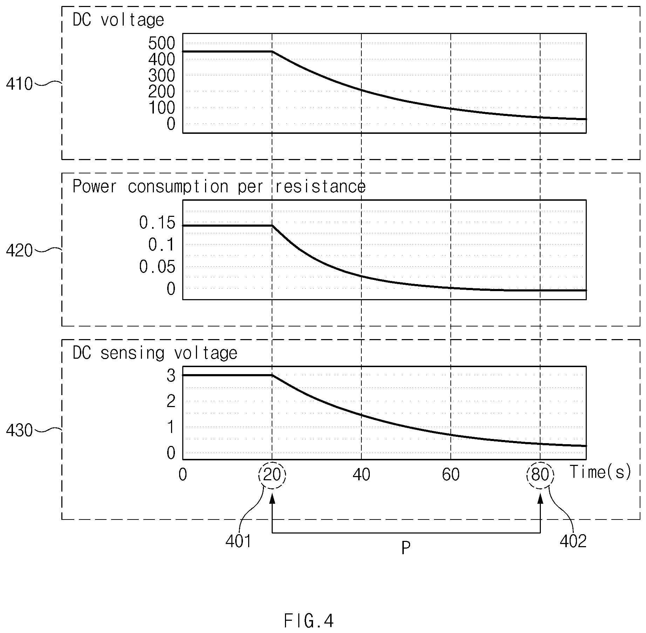

FIG. 4 is a graph showing DC voltage, power consumption per resistance, and DC sensing voltage, which are measured as a capacitor of an inverter apparatus is discharged, according to an embodiment of the present disclosure.

According to an embodiment, FIG. 4 may show that a capacitor of an inverter apparatus is discharged such that 60 V is reached within 60 seconds when the inverter apparatus is powered off after DC voltage is applied.

FIG. 4 according to an embodiment may include a first graph 410 indicating the DC voltage over time, a second graph 420 indicating power consumption per resistance over time, and a third graph 430 indicating DC sensing voltage over time.

FIG. 4 according to an embodiment may include information about a first time point 401 at which discharge begins, and a second time point 402 at which voltage of 60 V or less is reached after discharge. For example, an interval P' between the first time point 401 and the second time point 402 may be determined as 60 seconds. That is, at the second time point 402 being a time point after 60 seconds have passed since the first time point 401 at which the discharge started, the DC voltage reaches the voltage of 60 V or less.

The first graph 410 according to an embodiment may indicate a change in DC voltage over time. The DC voltage may include the voltage of a high-voltage battery. For example, referring to the first graph 410, the DC voltage may start discharging at voltage of 400 V or more and 500 V or less, and may continue discharging until it reaches voltage of 60 V or less.

The second graph 420 according to an embodiment may indicate the power consumption per resistance over time. As discharge begins, the power consumption per resistance may also decrease. The power consumption per resistance may be considered to calculate heat generation of a resistor.

The third graph 430 according to an embodiment may indicate the DC sensing voltage over time. The DC sensing voltage may include voltage capable of being input to an MCU. For example, the DC sensing voltage may include voltage, which is obtained by dividing the DC voltage into the voltage capable of being input to the MCU. As a specific example, the DC sensing voltage may include voltage divided into 0 V or more and 5 V or less.

An inverter apparatus according to an embodiment may discharge the DC voltage to reach 60 V within 60 seconds by using a resistor performing both a discharge function and a sensing function. Moreover, the inverter apparatus may measure the DC voltage or the DC sensing voltage by using a resistor performing both the discharge function and the sensing function.

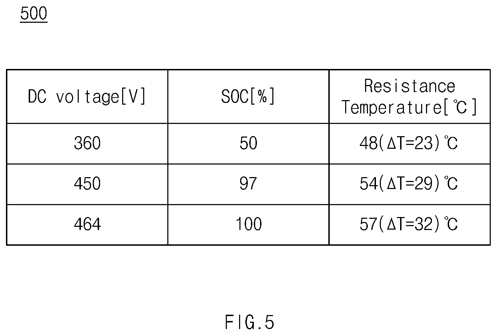

FIG. 5 is a diagram showing a temperature of resistance according to DC voltage of an inverter apparatus, according to an embodiment of the present disclosure.

Table 500 of FIG. 5 according to an embodiment may include information about state of charge (SOC) according to DC voltage and information about a temperature of resistance.

According to FIG. 5 according to an embodiment, as DC voltage increases, the temperature of a resistor may also increase. The temperature of the resistor may include a temperature measured due to heating of the resistor.

A temperature change amount ΔT shown in Table 500 of FIG. 5 according to an embodiment may mean a difference between a temperature, at which the resistor generates heat, and an ambient temperature of the resistor. For example, the temperature of the resistor is 54 degrees. On the other hand, when the ambient temperature of the resistor is 25 degrees, the temperature change amount ΔT may be determined as 29 degrees.

According to Table 500 of FIG. 5 according to an embodiment, as the DC voltage increases, the temperature of the resistor may also increase. As the temperature of the resistor increases, the temperature change amount ΔT may increase.

According to an embodiment, it may be determine whether the resistor may normally perform both a discharge function and a sensing function, by using the temperature change amount ΔT. For example, it may be determined that the resistor may normally perform both the discharge function and the sensing function when the temperature change amount ΔT is within 50 degrees. Accordingly, at least one of a resistance value, the number of resistors, or a method of connecting the resistors, or any combination thereof may be determined such that the temperature change amount ΔT may be maintained within 50 degrees.

Referring to FIG. 5 according to an embodiment, the resistance value, the number of resistors, or the connection method of the resistors of the inverter apparatus may be determined in consideration of the temperature of the resistor according to the DC voltage.

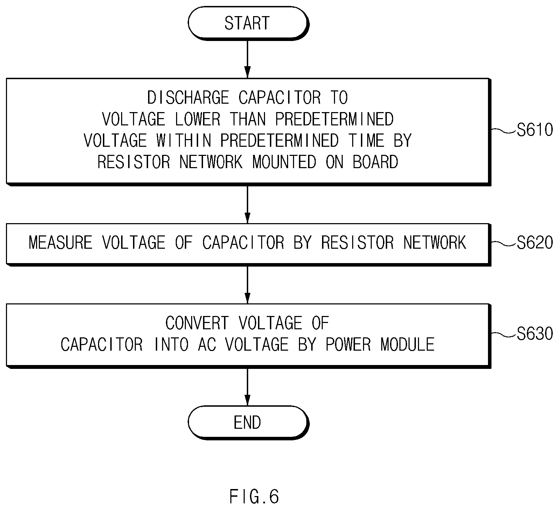

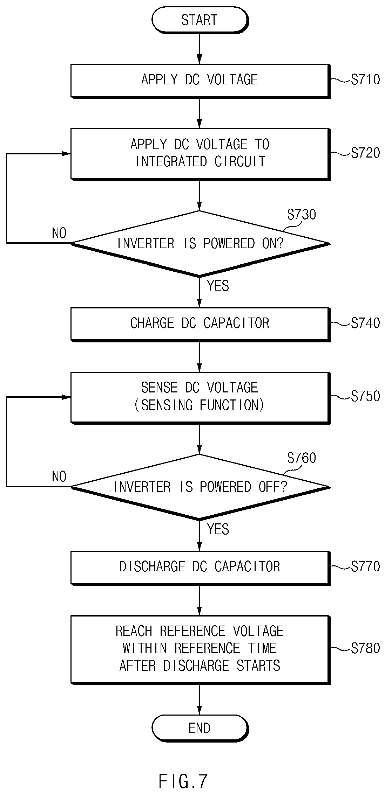

Hereinafter, an inverter apparatus or an inverter control method according to an embodiment of the present disclosure will be specifically described with reference to FIGS. 6 and 7.

Hereinafter, the inverter apparatus 100 of FIG. 1 may perform the process of FIGS. 6 or 7. For example, it may be understood that the operation of FIGS. 6 or 7 is performed by the inverter apparatus 100.

FIG. 6 is a flowchart for describing an inverter apparatus or an inverter control method, according to an embodiment of the present disclosure.

According to an embodiment, a capacitor may be discharged to voltage lower than predetermined voltage within a predetermined time by a resistor network mounted on a board (S610). For example, the inverter apparatus 100 may discharge the voltage of a capacitor to the voltage lower than the predetermined voltage within the predetermined time by using the resistor network.

According to an embodiment, the resistor network may include a plurality of resistor sets connected in series, and the resistor set may include a plurality of resistors connected in parallel.

The predetermined time may be set to the time required to reduce voltage remaining in the capacitor to a safe level to prevent electric shock. As a specific example, the predetermined time may be set to 60 seconds.

The predetermined voltage may be set to the extent to which the voltage remaining in the capacitor after the power is turned off does not cause an electric shock. As a specific example, the predetermined voltage may be set to 60 V or less.

According to an embodiment, the voltage of the capacitor may be measured by the resistor network (S620). For example, the inverter apparatus may measure the voltage of the capacitor by using the resistor network. The voltage of the capacitor may include voltage obtained by accumulating DC voltage.

According to an embodiment, the voltage of the capacitor may be converted into AC voltage by a power module (S630). For example, the power module may convert the DC voltage into the AC voltage through a switching element. In other words, the power module may convert the voltage of the capacitor into the AC voltage through the switching element.

According to an embodiment, the board may mount an MCU that controls the power module and the resistor network.

According to an embodiment, the resistor network may perform both operations of discharging the capacitor and measuring the voltage of the capacitor by being electrically connected between the capacitor and the power module.

According to an embodiment, the inverter apparatus may control the voltage of a high-voltage battery. The voltage of the high-voltage battery may be applied to the inverter apparatus. The inverter apparatus may include a DC capacitor, and the DC voltage applied to the inverter apparatus may be accumulated in the DC capacitor. The DE capacitor may prevent a ripple. Afterwards, the DC voltage may be converted into the AC voltage. The AC voltage may be used to drive a motor. In this case, when the inverter apparatus is powered off, the voltage accumulated in the DC capacitor may be discharged to prevent electric shock accidents. The inverter apparatus may discharge the voltage accumulated in a DC capacitor by using a resistor performing both a discharge function and a sensing function.

FIG. 7 is a flowchart for describing a mechanism, in which a resistor network of an inverter apparatus performs a discharge function and a voltage sensing function, according to an embodiment of the present disclosure.

According to an embodiment, DC voltage may be applied to an inverter (S710). The DC voltage may include the DC voltage of a high-voltage battery. The inverter of FIG. 7 may be understood as an inverter apparatus according to an embodiment of the present disclosure.

According to an embodiment, the DC voltage may be applied to an integrated circuit of the inverter (S720). The integrated circuit may mean a circuit includes a resistor capable of discharging the voltage of a DC capacitor or sensing the DC voltage.

According to an embodiment, it may be determined whether the inverter is powered on (S730).

According to an embodiment, when the inverter is powered on, the DC capacitor may be charged (S740). The DC capacitor may include a capacitor included in the inverter apparatus. The DC capacitor may be charged by the DC voltage.

According to an embodiment, when the inverter is powered on, the DC voltage of the inverter may be sensed (S750). At this time, the DC voltage may be sensed by using a resistor capable of sensing the DC voltage. The DC voltage may be continuously sensed while the inverter is powered on.

According to an embodiment, it may be determined whether the inverter is powered off (S760).

According to an embodiment, when the inverter is not powered off, the DC voltage may continue to be sensed.

According to an embodiment, when the inverter is powered off, the DC capacitor may be discharged (S770).

According to an embodiment, the DC capacitor voltage may reach reference voltage within a reference time after the discharge starts (S780). In this case, the DC capacitor may be discharged such that the reference voltage is reached within the reference time through a resistor capable of discharging the voltage of the DC capacitor or sensing the DC voltage.

For example, the reference time may be set to the time required to reduce voltage remaining in the DC capacitor to a safe level to prevent electric shock. As a specific example, the reference time may be set to 60 seconds.

The reference voltage may be set to the extent to which the voltage remaining in the DC capacitor after the power of the inverter is turned off does not cause an electric shock. As a specific example, the reference voltage may be set to 60 V or less.

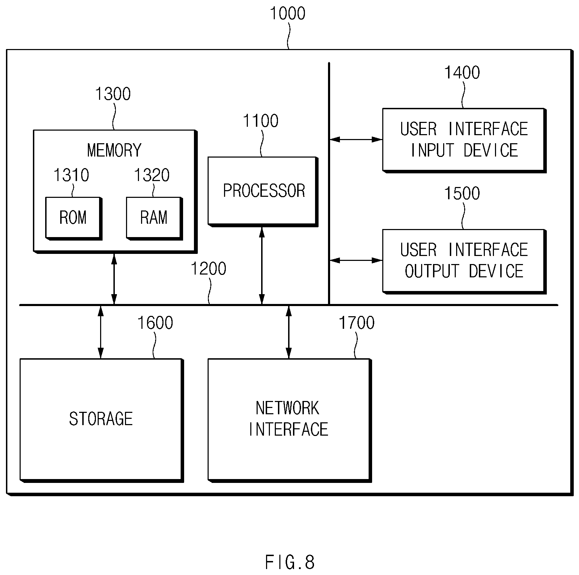

FIG. 8 is a diagram illustrating a computing system related to an inverter apparatus or an inverter control method, according to an embodiment of the present disclosure.

Referring to FIG. 8, a computing system 1000 may include at least one processor 1100, a memory 1300, a user interface input device 1400, a user interface output device 1500, a storage 1600, and a network interface 1700, which are connected with each other via a bus 1400.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read only memory (ROM) 1310 and a random access memory (RAM) 1320.

Accordingly, the operations of the method or algorithm described in connection with the embodiments disclosed in the specification may be directly implemented with a hardware module, a software module, or a combination of the hardware module and the software module, which is executed by the processor 1100. The software module may reside on a storage medium (i.e., the memory 1300 and/or the storage 1600) such as a random access memory (RAM), a flash memory, a read only memory (ROM), an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

The above description is merely an example of the technical idea of the present disclosure, and various modifications and modifications may be made by one skilled in the art without departing from the essential characteristic of the present disclosure.

Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

The present technology may design a circuit that may perform discharging and sensing functions simultaneously by removing a discharge resistor designed inside a capacitor and reconstructing a sensing resistor used in the existing board in a new method.

Moreover, the present technology may reduce the size of a capacitor and the cost of the discharge resistor by eliminating the discharge resistor designed inside the capacitor.

Furthermore, the present technology may not require a wiring for fixing the discharge resistor inside the capacitor or a structure for supporting the discharge resistor by eliminating the discharge resistor designed inside the capacitor.

Also, the present technology may reduce the cost of wiring and connection tasks by eliminating the discharge resistor designed inside the capacitor.

Besides, the present technology may prevent mechanical damage to components due to vibrations generated during the driving of a vehicle or vibration testing by eliminating the discharge resistor designed inside the capacitor.

In addition, the present technology may improve the durability of a resistor by soldering a resistor performing both a discharge function and a sensing function to an integrated board installed inside an inverter.

Besides, a variety of effects directly or indirectly understood through the present disclosure may be provided.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.
200: BOARD
210: RESISTOR NETWORK
220: RESISTOR SET
300: CIRCUIT
310: RESISTOR NETWORK
311: RESISTOR NETWORK
312: THIRD RESISTOR
320: LPF ELEMENT GROUP
321: FOURTH RESISTOR
322: SECOND CAPACITOR
330: DIFFERENTIAL AMPLIFIER ELEMENT GROUP
410: FIRST GRAPH
420: SECOND GRAPH
430: THIRD GRAPH

## Claims

1. An inverter apparatus comprising:
a capacitor to which DC voltage is applied;
a power module configured to convert voltage of the capacitor into AC voltage through a switching element;
a micro controller unit (MCU) configured to control the power module;
a resistor network including a plurality of resistor sets connected in series; and
a board on which the MCU and the resistor network are mounted;
wherein each of the resistor sets includes a plurality of resistors connected in parallel; and
wherein the resistor network is electrically connected between the capacitor and the power module.

2. The inverter apparatus of claim 1, wherein the resistor network is positioned within a predetermined distance from a coupling structure of the board for coupling the board and a housing, or is positioned at an edge of the board.

3. The inverter apparatus of claim 1, wherein the resistor network is configured to:
discharge the capacitor such that the voltage of the capacitor reaches a voltage lower than a predetermined voltage within a predetermined time; or
measure the voltage of the capacitor.

4. The inverter apparatus of claim 3, wherein the resistor network is configured to discharge the voltage of the capacitor to the predetermined voltage within the predetermined time based on a predetermined condition related to a power of the inverter apparatus.

5. The inverter apparatus of claim 4, wherein the predetermined condition related to the power of the inverter apparatus includes at least one of a condition that the power of the inverter apparatus is turned off, a condition that the inverter apparatus does not operate normally, or any combination thereof.

6. The inverter apparatus of claim 3, wherein the resistor network is configured to discharge the capacitor such that the voltage of the capacitor reaches the voltage lower than the predetermined voltage within the predetermined time, based on the power of the inverter apparatus being turned off while the resistor network is configured to measure the voltage of the capacitor in a state where the voltage of the capacitor is accumulated.

7. The inverter apparatus of claim 1, wherein a third resistor connected in series with the resistor network is further mounted on the board, and wherein the third resistor is configured to divide the voltage of the capacitor into a level of voltage input to the MCU.

8. The inverter apparatus of claim 1, wherein the resistor network includes a first resistor and a second resistor, and wherein an interval at which the first resistor and the second resistor are placed on the board is determined based on a temperature at which each of the first resistor and the second resistor generates heat.

9. The inverter apparatus of claim 1, wherein the resistor network includes a predetermined number of resistors, and wherein the predetermined number is determined such that a temperature at which the resistors generate heat does not exceed a predetermined temperature.

10. The inverter apparatus of claim 1, wherein the voltage of the capacitor is measured by a voltage drop between a first end of the resistor network and a second end of the resistor network.

11. An inverter control method, the method comprising:
discharging, by a resistor network mounted on a board, a capacitor such that a voltage of the capacitor reaches a voltage lower than a predetermined voltage within a predetermined time;
determining, by the resistor network, the voltage of the capacitor; and
converting, by a power module, the voltage of the capacitor into AC voltage;
wherein the resistor network and an MCU configured to control the power module are mounted on the board;
wherein the resistor network includes a plurality of resistor sets connected in series, and the resistor network is electrically connected between the capacitor and the power module; and
wherein each of the plurality of resistor sets includes a plurality of resistors connected in parallel.

12. The method of claim 11, wherein the resistor network is positioned within a predetermined distance from a coupling structure of the board for coupling the board and a housing, or is positioned at an edge of the board.

13. The method of claim 11, wherein the discharging of the capacitor includes discharging, by the resistor network, the voltage of the capacitor to the predetermined voltage within the predetermined time based on a predetermined condition related to a power of an inverter apparatus,
wherein the predetermined condition includes at least one of a condition that the power of the inverter apparatus is turned off, a condition that the inverter apparatus does not operate normally, or any combination thereof.

14. The method of claim 11, wherein the discharging of the capacitor includes discharging, by the resistor network, the capacitor such that the voltage of the capacitor reaches the voltage lower than the predetermined voltage within the predetermined time, based on a power of an inverter apparatus being turned off while the resistor network is used to measure the voltage of the capacitor in a state where the voltage of the capacitor is accumulated.

15. The method of claim 11, further comprising dividing the voltage of the capacitor into a level of voltage input to the MCU by a third resistor, which is connected in series with the resistor network and which is mounted on the board.
